Europäisches Patentamt

European Patent Office

Office européen des brevets

(11) Veröffentlichungsnummer: **0 221 118**
**B1**

(12) **EUROPÄISCHE PATENTSCHRIFT**

(45) Veröffentlichungstag der Patentschrift: 08.08.90

(51) Int. Cl.⁵: **A 61 C 19/00, H 02 J 7/00**

(21) Anmeldenummer: **86902797.9**

(22) Anmeldetag: **09.05.86**

(86) Internationale Anmeldenummer:
**PCT/DE86/00191**

(87) Internationale Veröffentlichungsnummer:
**WO 86/06614 20.11.86 Gazette 86/25**

(54) BEARBEITUNGSGERÄT ZUR ÖRTLICHEN BESTRAHLUNG MIT SICHTBAREM ODER UNSICHTBAREM LICHT.

(30) Priorität: **09.05.85 DE 3516774**

(43) Veröffentlichungstag der Anmeldung:
**13.05.87 Patentblatt 87/20**

(45) Bekanntmachung des Hinweises auf die
Patenterteilung:
**08.08.90 Patentblatt 90/32**

(84) Benannte Vertragsstaaten:
**AT BE CH DE FR GB IT LI LU NL SE**

(56) Entgegenhaltungen:
EP-A-0 003 312
EP-A-0 027 959
EP-A-0 166 364
FR-A-1 602 892
FR-A-2 552 592
US-A-3 109 238

Radio Fernsehen Elektronik, Bd. 27, Heft 4, 1978,
Batteriezustandswächter mit LED-Anzeige,
Seite 263

(73) Patentinhaber: **FIRMA WILHELM SEDLBAUER
GMBH FABRIK FÜR FEINMECHANIK UND
ELEKTRONIK**
**Wittelsbacherstrasse 2-8**
**D-8352 Grafenau (DE)**

(72) Erfinder: **STEINER, Hans**
**Parsbergstr. 21**
**D-8034 Germering (DE)**
Erfinder: **MITTERNDORFER, Alois**
**Haag 24**
**D-8351 Hohenau (DE)**

(74) Vertreter: **Seibert, Rudolf, Dipl.-Ing. et al**
**Tattenbachstrasse 9**
**D-8000 München 22 (DE)**

## Beschreibung

Die vorliegende Erfindung bezieht sich auf ein Bearbeitungsgerät zur örtlichen Bestrahlung definierter Bearbeitungsstellen mit sichtbarem oder unsichtbarem Licht. Derartige Geräte werden vorwiegend als Behandlungsgeräte in der Zahnheilkunde zum Aushärten von Zahnfüllungen benötigt, wo mit Hilfe von sichtbarem Licht, aber auch Infrarotlicht, Kunststoffmassen ausgehärtet werden.

Während ursprünglich die von einer Lichtquelle stammenden Lichtstrahlen über einen relativ langen Lichtleiter an die Behandlungsstelle geleitet wurden, ist man gem. einer neueren Entwicklung (z.B. EP—A—0 003 312) dazu übergegangen, die Lichtquelle in einem Handgerät unterzubringen, das an seinem Kopf einen starren Lichtleiter trägt. Dabei wurden im Inneren des Handgerätes über entsprechende optische Ankoppelglieder die von der Lichtquelle erzeugten Lichtstrahlen über den Lichtleiter an die Bearbeitungs- bzw. Behandlungsstelle übertragen. Dabei wird in aller Regel im Bearbeitungsgerät zusätzlich ein Ventilator mit untergebracht, der die Lichtquelle, die ja eine relativ hohe Leistungsaufnahme hat, ausreichend kühlt.

Nachteilig bei der Behandlung mit einem derartigen Gerät ist das erforderliche Anschlußkabel für die Stromversorgung, das gerade bei einem dentalmedizinischen Gerät, das ja in den verschiedensten Lagen relativ zum Raum eingesetzt werden muß, um selbst an unzugänglichen Stellen im Mund eines Patienten die Füllungen aushärten zu können, störend ist.

Aufgabe der Erfindung ist es, ein Bearbeitungsgerät der vorliegenden Gattung so weiter zu bilden, daß die Handhabung ohne irgend eine Einbuße an der Wirksamkeit der Bestrahlung selbst erleichtert wird.

Diese Aufgabe wird mit einem Bearbeitungsgerät mit den Merkmalen des Patentanspruches 1 erfüllt.

Bei dem Bearbeitungsgerät nach der Erfindung werden als im Handgerät wiederaufladbare Batterien, also sog. Akkumulatoren, mit untergebracht. Da für die Aushärtung jeweils eine genau definierte Lichtmenge mit genau definierter Intensität benötigt wird, ist ein, ggf. sogar mechanischer, Zähler vorgesehen, der die Anzahl der Einsätze des Gerätes registriert, wobei, da jeder einzelne Einsatz über eine genau definierte Zeitspanne verläuft, sehr leicht festgestellt werden kann, wann der Zähler einen weiteren Einsatz des Gerätes sperren muß, ohne daß hochwertige elektronische Überwachungsgeräte benötigt werden. Ein derartiger Zähler, der dem Zahnarzt ggf. durch Beseitigung der Betriebsbereitschaft des Gerätes selbst anzeigt, daß das Gerät erst wieder voll aufgeladen werden muß, muß dann ggf. nach dem Aufladevorgang nur zurückgestellt werden, und das Gerät kann wieder für die vorgesehene Zahl von Behandlungen in gleicher Weise verwendet werden.

Weitere Einzelheiten eines Bearbeitungsgerätes nach der Erfindung werden im folgenden in Verbindung mit der anliegenden Zeichnung erläutert.

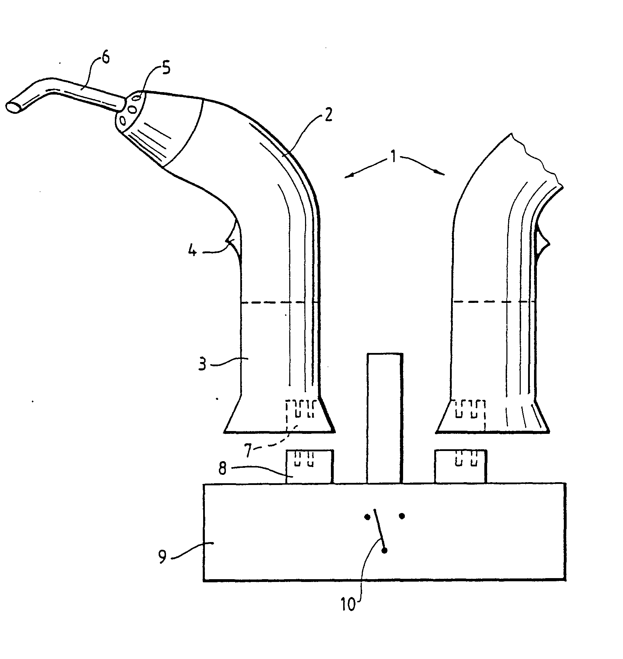

In der Zeichnung ist mit 1 allgemein ein Behandlungs- bzw. Bearbeitungsgerät bezeichnet. Dabei ist davon ausgegangen, daß ein einzelner Zahnarzt mindestens zwei derartiger Bearbeitungsgeräte besitzt, die im übrigen auf einem für beide Geräte gemeinsamen Ladegerät 9 abgestellt werden können.

Jedes einzelne Bearbeitungsgerät besteht aus einem Gehäuse 2, an das sich ein Gehäuseteil 3 anschließt, in welchem wiederaufladbare Batterien untergebracht sind.

In dem Gehäuse 2 sind im oberen Bereich in an sich bekannter Weise eine Lichtquelle zusammen mit einem Ventilator untergebracht. Am Kopf 5 ist ein Lichtleiter 6 befestigt, über den das im Inneren des Gehäuses 2 von der Lichtquelle erzeugten Licht über in der Zeichnung nicht dargestellte optische Ankoppelglieder an die zu behandelnde Stelle übertragen wird. Der Lichtleiter selbst kann starr (aus Glas) oder auch plastisch verbiegbar (aus Kunststoff) ausgebildet sein.

Zumindest das Einschalten der Lichtquelle erfolgt über den Schalter 4, der als Schiebeschalter dargestellt ist. Dabei wird durch einen im Inneren des Gerätes vorhandenen Zeitschalter die Ausschaltung in Zwangsfolge vorgenommen werden und entspricht einer für ein einwandfreies Aushärten notwendigen Bestrahlungszeit.

Im Fuß des Gehäuses, dort wo die Batterien bzw. Akkumulatoren untergebracht sind, ist eine Anschlußeinheit 7, die nur gestrichelt angedeutet ist, eingebaut. Diese Anschlußeinheit 7 ist so ausgebildet, daß sie mit einer Kontakteinheit 8 auf dem Ladegerät 9 zusammenwirken kann, so daß unmittelbar durch Aufsetzen des Handgerätes 1 auf das Ladegerät eine elektrische Verbindung hergestellt wird, so daß dann der Ladevorgang durchgeführt werden kann.

Schematisch ist durch einen Schalter 10 angedeutet, daß jeweils nur eines der beiden Bearbeitungsgeräte 1, also beispielsweise das links oder aber auch das rechts dargestellte Gerät geladen wird.

Für den auf dem Gebiet erfahrenen Fachmann ergibt sich dabei, daß das Ladegerät selbstverständlich mit den verschiedensten Anzeigen über den Ladezustand der einzelnen Geräte, also beispielsweise über die Ladezeit, die geladene Kapazität aber auch die Klemmenspannung ausgerüstet sein kann, wobei eine Anzeige über LGD durchaus möglich ist. Dabei hat sich für die Praxis die Verwendung von soviel Batterien als besonders vorteilhaft ergeben, daß eine Klemmenspannung von 14,2 V bei einer Stromabgabe von ca. 7,5 A vorhanden ist.

Wird dabei, wie schon angedeutet, das Gerät dann und immer nur dann aufs Ladegerät abgesetzt, wenn eine vorgegebene Anzahl von Einsätzen, das ist im allgemeinen pro Einsatz eine Brenndauer der Lichtquelle von 20 s, durchgeführt wurden, dann werden die einzelnen Batterien besonders geschont, da sie jeweils voll aufgeladen und jeweils wieder voll entladen werden.

Um ein Überladen der einzelnen Geräte zu vermeiden, kann dann in an sich bekannnter Weise das Gerät mit einer Automatik versehen seien, die nach dem Aufladen vom eigentlichen Ladestrom auf einen Ladeerhaltungszustand übergeht. Dies empfiehlt sich im besonderen, wenn die Aufladung über längere Behandlungspausen, z.B. über Nacht erfolgt.

Für die Realiserung der Erfindung sind hinsichtlich der Formgestaltungen der einzenen Geräte keinerlei Bedingungen gegeben, wobei der Schutzumfang von den nachstehenden Ansprüchen festgestellt wird.

**Patentansprüche**

1. Bearbeitungsgerät zur örtlichen Bestrahlung definierter Bearbeitungsstellen mit sichtbarem oder unsichtbarem Licht, insbesondere zum Aushärten von Zahnfüllungen in der Dentalbehandlung, mit einer in einem Handgerät untergebrachten über einen Einschalter (4) einschaltbaren Lichtquelle, deren Lichtemision über optische Ankoppelglieder mittels eines am Kopf des Gerätes angebrachten starren oder plastischen Lichtleiters an die Bearbeitungs- (Behandlungs-) stelle übertragen wird, dadurch gekennzeichnet, daß das die Lichtquelle und ggfs. einen Ventilator zur Kühlung der Lichtquelle sowie die optischen Ankoppelglieder einschl. Lichtleiter aufweisende Handgerät (1) zur Aufnahme von wieder aufladbaren Batterien (Akkumulatoren) ausgebildet ist, wobei bei jedem Einsatz das Bearbeitungsgerät für eine vorgesehene Zeitspanne an der Batterie angeschlossen bleibt, und daß ein Zähler in Verbindung mit dem Einschalter (4) für das Gerät vorgesehen ist, der bei einer vorgegebenen Anzahl von Einschaltungen ein weiteres Einschalten bis zur Durchführung des Ladevorganges unterbindet.

2. Bearbeitungsgerät nach Anspruch 1, dadurch gekennzeichnet, daß die Akkumulatorbatterien im Fuß des Gerätes untergebracht sind.

3. Bearbeitungsgerät nach Anspruch 1 oder 2, dadurch gekennzeichnet, daß im Bereich des Fußes, insbesondere an der Unterseite eine gegen Berühren gesicherte Steckanordnung zum Einstecken des Bearbeitungsgerätes in ein Ladegerät vorgesehen ist.

4. Bearbeitungsgerät nach einem der Ansprüche 1 bis 3, dadurch gekennzeichnet, daß ein mehrere Bearbeitungsgeräte aufnehmendes Ladegerät mit einer Ladeerhaltungsvorrichtung vorgesehen ist, die jeweils an die Geräte angeschlossen ist, die nicht an der Ladespannung liegen.

**Revendications**

1. Instrument de façonnage pour l'éclairage local d'emplacements de traitements déterminés avec une lumière visible ou invisible en particulier pour durcir des matériaux de remplissage de caries dentaires dans le traitement des dents, comportant une source lumineuse logée dans une pièce à main et susceptible d'être branchée par l'intermédiaire d'un interrupteur (4), et dont l'émission lumineuse est transmise à l'emplacement de façonnage (de traitement) par l'intermédiaire d'organes de couplage à l'aide d'un guide d'ondes de lumière rigide ou souple fixé à la tête de l'instrument, caractérisé par le fait que la source lumineuse et éventuellement un ventilateur servant à refroidir la source lumineuse ainsi que les organes de couplage, y compris les guides d'ondes de lumière, est réalisée de manière à recevoir des batteries (accumulateurs) rechargeables, l'instrument de façonnage restant relié à la batterie pour une durée prédéterminée toutes les fois qu'il est utilisé et qu'il est prévu un compteur en liaison avec l'interrupteur (4) pour l'instrument, et qui, pour un nombre de branchements à la fermeture, interdit toute autre fermeture de l'interrupteur jusqu'à l'exécution du processus de chargement.

2. Instrument de façonnage selon la revendication 1, caractérisé par le fait que les batteries d'accumulateurs sont logées dans le pied de l'instrument.

3. Instrument de façonnage selon la revendication 1, caractérisé par le fait que dans la région du pied, en particulier sur le côté inférieur est prévu un dispositif à enfichage à sécurité contre les contacts accidentels, pour l'enfichage de l'instrument dans un appareil de charge (chargeur).

4. Instrument de façonnage selon l'une des revendications 1 à 3, caractérisé par le fait qu'il est prévu, pour recevoir plusieurs instruments de façonnage, un appareil de charge comportant un dispositif de conservation de la charge qui est relié à ceux des instruments qui ne sont pas reliés à la tension de charge.

**Claims**

1. A processing device for locally irradiating determinate processing locations with visible or invisible light, in particular for hardening tooth fillings in dental treatment, comprising a light source which is accommodated in a hand-operated device and which can be switched on via a circuit connector (4), and the light emission of which is transferred to the processing (treatment) location via optical coupling elements by means of a rigid or plastic light conductor aranged at the head of the device, characterised in that the hand-operated device (1), which comprises the light source and where appropriate a ventilator for cooling the light source and the optical coupling elements including the light conductor, is designed to accommodate rechargeable batteries (accumulators), where on each occasion of use the processing device remains connected to the battery for a given length of time, and that the device is provided with a counter which is coupled with the circuit connector (4) and which, after a predetermined number of connections, suppresses any further connection until the charging process has been carried out.

2. A processing device as claimed in Claim 1, characterised in that the accumulator batteries are accommodated in the base of the device.

3. A processing device as claimed in Claim 1 or Claim 2, characterised in that in the region of the base, in particular on the underneath thereof, is arranged a plug-in arrangement which is protected against contact and which serves to plug the processing device into a charging device.

4. A processing device as claimed in one of the Claims 1 to 3, characterised in that a charging device which accommodates a plurality of processing devices is provided with a charge conservation device which is connected to the respective devices which are not connected to the charging voltage.